# EUROPÄISCHE PATENTANMELDUNG

(11) **EP 4 008 443 A1**
(43) Veröffentlichungstag der Anmeldung: **08.06.2022**
(21) Anmeldenummer: 21200857.7
(22) Anmeldetag: 05.10.2021
(51) Int. Cl.: B07C 5/36, B65G 47/84

(54) **SORTIERANLAGE UND VERFAHREN ZUM SORTIEREN VON GEGENSTÄNDEN**

(30) Priorität: 01.12.2020 DE 102020131835
(71) Anmelder: Rasch Consulting GmbH, 33649 Bielefeld (DE)
(72) Erfinder: SCHNEUING, Ralf, 33649 Bielefeld (DE)
(74) Vertreter: Dantz, Jan Henning

(57) **Zusammenfassung**

Eine Sortieranlage (1) umfasst eine Vielzahl von Transportwagen (10, 10', 10"), die entlang einer Führungsbahn (2) umlaufend verfahrbar sind, und an mindestens einer Aufladestation (4) mindestens ein Gegenstand auf einen Transportwagen (10, 10', 10") aufladbar ist, der an einer Entladestation (3) von einer Vielzahl von Entladestationen (3) von dem Transportwagen (10, 10', 10") über eine Abwurfvorrichtung (12, 50) des Transportwagens (10, 10', 10") abwerfbar ist, wobei die Abwurfvorrichtung (12, 50) über ein umlaufendes flexibles Umlenkelement (13, 14, 15) antreibbar ist, an dem ein Mitnehmer (16, 20) festgelegt ist, und über einen Anschlag (30, 30') der Mitnehmer (16, 20) und das flexible Umlenkelement (13, 14, 15) bewegbar sind, um die Abwurfvorrichtung (12, 50) anzutreiben. Ferner betrifft die Erfindung ein Verfahren zum Sortieren von Gegenständen.

## Beschreibung

Die vorliegende Erfindung betrifft eine Sortieranlage mit einer Vielzahl von Transportwagen, die entlang einer Führungsbahn umlaufend verfahrbar sind, und an mindestens einer Aufladestation mindestens ein Gegenstand auf einen Transportwagen aufladbar ist, der an einer Entladestation von einer Vielzahl von Entladestationen von dem Transportwagen über eine Abwurfvorrichtung des Transportwagens abwerfbar ist, und ein Verfahren zum Sortieren von Gegenständen.

Die EP 2 159 174 A1 offenbart eine Sortieranlage, bei der einzelne Transportwagen umlaufend bewegt werden. An jedem Transportwagen ist mindestens ein Schieber verfahrbar gelagert, um einen Gegenstand an einer Entladestation abzuwerfen. Die Betätigung des Schiebers erfolgt über dem Transportwagen angeordnete Führungsschienen, die schräg zur Transportrichtung des Transportwagens ausgerichtet sind und an denen eine Führungsrolle verfahrbar ist, um den Schieber von einer Ausgangsposition in eine Abwurfposition anzutreiben. Die Montage solcher Führungsschienen ist vergleichsweise aufwändig, da eine exakte Positionierung relativ zu der Führungsrolle zum Antreiben des Schiebers vorgenommen werden muss. Ein weiterer Nachteil besteht in dem hohen Platzbedarf, da der Transportwagen etwa die gleiche Länge in Transportrichtung bewegt werden muss, um den Schieber von der Ausgangsposition in die Entladeposition zu bewegen. Dementsprechend müssen die einzelnen Entladestationen in einem vergleichsweise großen Abstand zueinander angeordnet werden.

Es ist daher Aufgabe der vorliegenden Erfindung, eine Sortieranlage und ein Verfahren zum Sortieren von Gegenständen zu schaffen, bei dem ein Transportwagen mit einer einfach ausgestalteten Abwurfvorrichtung vorgesehen ist, die ein effektives Sortierverfahren ermöglicht.

Diese Aufgabe wird mit einer Sortieranlage mit den Merkmalen des Anspruches 1 sowie einem Verfahren zum Sortieren von Gegenständen mit den Merkmalen des Anspruches 15 gelöst.

Die erfindungsgemäße Sortieranlage umfasst einen Transportwagen mit einer Abwurfvorrichtung, um an einer Entladestation mindestens einen Gegenstand abwerfen zu können. Die Abwurfvorrichtung ist dabei über ein umlaufenden flexibles Umlenkelement antreibbar, an dem ein Mitnehmer festgelegt ist, der gegen einen Anschlag bewegbar ist, um den Mitnehmer und das flexible Umlenkelement an dem Transportwagen zu bewegen und damit die Abwurfvorrichtung anzutreiben. Durch den Kontakt des Mitnehmers mit dem Anschlag kann eine entsprechende Bewegung eingeleitet werden, wobei die Position des Anschlages relativ zu dem Mitnehmer in einem gewissen Toleranzbereich erfolgen kann, da nur ein Abbremsen oder Anhalten des Mitnehmers bewirkt wird. Die Bewegung des Transportwagens wird genutzt, um den Mitnehmer anzutreiben, so dass keine Führungsvorrichtung, Stellweichen und kein weiterer Motor für die Abwurfvorrichtung erforderlich sind.

Vorzugsweise umfasst das flexible Umlenkelement ein Band, einen Riemen, eine Kette oder ein anderes flexibles Element, das entsprechende Kräfte von dem Mitnehmer auf die Abwurfvorrichtung übertragen kann. Das flexible Umlenkelement kann dabei über mehrere drehbare gelagerte Umlenkrollen an dem Transportwagen geführt sein. Das Umlenkelement kann wahlweise einteilig ausgebildet sein oder durch zwei, drei oder mehr unverbundene Abschnitte gebildet werden, die miteinander gekoppelt sind.

Vorzugsweise weist das flexible Umlenkelement einen ersten Abschnitt auf, der sich im Wesentlichen parallel zur Bewegungsrichtung des Transportwagens erstreckt, und einen zweiten Abschnitt, der sich im Wesentlichen senkrecht zur Bewegungsrichtung des Transportwagens erstreckt. An dem ersten Abschnitt kann der Mitnehmer fixiert sein, um die Abwurfvorrichtung anzutreiben. An dem zweiten Abschnitt kann die Abwurfvorrichtung fixiert werden, die im Wesentlichen senkrecht zur Bewegungsrichtung des Transportwagens bewegbar ist. Die beiden Abschnitte können wahlweise miteinander verbunden oder unverbunden ausgebildet sein. Bevorzugt sind die beiden Abschnitte unverbunden und über mindestens ein Getriebe miteinander gekoppelt. Das Getriebe kann beispielsweise durch Zahnräder, Umlenkrollen oder andere Getriebeteile gebildet sein.

Vorzugsweise umfasst das Getriebe zwischen den beiden Abschnitten des flexiblen Umlenkelementes eine Übersetzung, so dass der Abschnitt senkrecht zur Bewegungsrichtung des Transportwagens schneller oder langsamer bewegt wird als der Abschnitt im Wesentlichen parallel zur Bewegungsrichtung des Transportwagens. Diese Übersetzung, beispielsweise in einem Bereich zwischen 1:1,2 bis 1:3, sorgt bevorzugt für eine schnellere Bewegung der Abwurfvorrichtung, die im Wesentlichen senkrecht zur Bewegungsrichtung des Transportwagens bewegt wird. Durch die schnellere Bewegung kann der Bauraum reduziert werden, da die Entladevorrichtung über eine kürzere Wegstrecke des Transportwagens einen Entladevorgang durchführen kann. Alternativ ist es möglich, durch das Getriebe eine Untersetzung zu bewirken und den Abschnitt senkrecht zur Bewegungsrichtung auch langsamer zu bewegen als den Abschnitt parallel zur Bewegungsrichtung, beispielsweise für schwere oder empfindliche Güter.

In einer weiteren Ausgestaltung umfasst das flexible Umlenkelement zwei Abschnitte, die sich im Wesentlichen parallel zur Bewegungsrichtung des Transportwagens erstrecken, wobei an einem ersten Abschnitt ein Mitnehmer zum Antreiben der Abwurfvorrichtung in Abwurfrichtung und an einem zweiten Abschnitt ein Mitnehmer zum Antreiben der Abwurfvorrichtung in gegenläufige Richtung vorgesehen ist. Dadurch kann über den Mitnehmer an dem ersten Abschnitt eine Bewegung der Abwurfvorrichtung von der Ausgangsposition in die Entladeposition und über eine Bewegung des Mitnehmers an dem zweiten Abschnitt von der Entladeposition in die Ausgangsposition vorgenommen werden. Die Bewegung des Transportwagens kann somit genutzt werden, um entsprechende gegenläufige Bewegungen der Entladevorrichtung nacheinander auszuführen.

Vorzugsweise weist die Abwurfvorrichtung einen bewegbaren Schieber, einen Schwenkarm oder ein Band auf, das mit dem flexiblen Umlenkelement, insbesondere einem Abschnitt im Wesentlichen senkrecht zur Bewegungsrichtung des Transportwagens, verbunden ist. Über den Schieber kann ein Gegenstand entlang einer Ladefläche verschoben werden, wobei der Schieber über Führungsmittel entlang des Transportwagens linear geführt sein kann. Statt einem linear verfahrbaren Schieber kann auch ein Schwenkarm eingesetzt werden, der über das flexible Umlenkelement angetrieben wird. Alternativ oder zusätzlich kann an dem Transportwagen auch ein umlaufendes Band vorgesehen sein, das eine Ladefläche für mindestens einen Gegenstand ausbildet, so dass durch Bewegen des umlaufenden Bandes dieser von dem Transportwagen an der Entladestation abgeworfen werden kann. An einem solchen Band kann optional mindestens ein Schieber fixiert sein, um einen Entladevorgang zu gewährleisten.

Entlang des Verfahrweges des Transportwagens sind an einer Führungsbahn vorzugsweise mehrere schaltbare Anschläge vorgesehen. Die Anschläge können dabei schwenkbar und/oder verschiebbar ausgebildet sein, um einen Mitnehmer an dem Transportwagen wahlweise ohne Kontaktierung vorbeifahren zu lassen oder diesen zu kontaktieren, um eine Bewegung der Abwurfvorrichtung einzuleiten. Vorzugsweise umfasst jeder Anschlag dabei ein Kontaktelement, das verschiebbar und/oder verschwenkbar ist, um die Krafteinleitung weniger abrupt zu gestaltet. Hierfür kann das Kontaktelement über eine Feder zu dem Mitnehmer hin vorgespannt sein, und bei Auftreffen des Mitnehmers kann die Feder komprimiert werden, um einen harten Anschlag zu vermeiden. Optional kann die Bewegung des Kontaktelements zusätzlich durch einen Dämpfer abgebremst werden.

Jeder Mitnehmer kann in einer bevorzugten Ausführungsform mehrere Teile umfassen, die jeweils an dem flexiblen Umlenkelement fixiert sind. Dadurch kann eine Krafteinleitung durch Auftreffen des Mitnehmers auf einen stationären Anschlag auf die mehreren Teile verteilt werden, so dass die punktuelle Belastung an einem Teil des Mitnehmers reduziert wird. Der Mitnehmer kann beispielsweise an den Zapfen einer Kette fixiert sein und relativ zu den Zapfen zumindest bereichsweise verschwenkt werden. Dadurch können die Teile des Mitnehmers entlang eines geraden Abschnittes des flexiblen Umlenkelementes aneinander anliegen, während diese an einem gebogenen Bereich des Umlenkelementes an einer Umlenkrolle oder einem Umlenkritzel beabstandet voneinander sind und in verschieden Richtungen von der Kette hervorstehen. An einem gebogenen Abschnitt des Umlenkelementes kann der Kontakt zwischen Mitnehmer und Anschlag auf einfache Weise gelöst werden, wenn der Mitnehmer aus der Bewegungsbahn des Anschlages verschwenkt wird.

Gemäß einer bevorzugten Ausführungsform ist die Abwurfvorrichtung von einer Ausgangsposition nur in eine Richtung in eine Abwurfrichtung zu einer Endposition bewegbar. Die Entladestationen sind dann nur auf einer Seite des Transportwagens angeordnet. Alternativ kann die Abwurfvorrichtung auch von einer Ausgangsposition in gegenüberliegende Richtungen jeweils zu einer Endposition bewegbar sein, so dass dann ein Gegenstand zu der rechten oder linken Seite bezogen auf die Bewegungsrichtung des Transportwagens entladen werden kann.

Zur Vermeidung lauter Anschlaggeräusche weist die Abwurfvorrichtung vorzugsweise Dämpfer auf, die die Abwurfvorrichtung vor Erreichen einer Endposition und optional auch der Ausgangsposition abbremsen.

Bei dem erfindungsgemäßen Verfahren werden eine Vielzahl von zusammenhängenden Transportwagen entlang einer umlaufenden Führungsbahn verfahren. An einem Transportwagen wird mindestens ein Gegenstand an einer oder mehreren Aufladestationen aufgeladen, um dann den Transportwagen zu einer Entladestation zu verfahren und dort den mindestens einen Gegenstand über eine Abwurfvorrichtung des Transportwagens zu entladen. Zum Entladen des mindestens einen Gegenstandes durch die Abwurfvorrichtung wird ein umlaufendes flexibles Umlenkelement über einen Mitnehmer angetrieben, der gegen einen Anschlag aufläuft, insbesondere einen im Wesentlichen stationären schaltbaren Anschlag, der in die Bewegungsbahn des Mitnehmers eingebracht wurde. Durch das Auflaufen des Mitnehmers auf diesen Anschlag kann die Bewegung des Transportwagens genutzt werden, um die Abwurfvorrichtung über das flexible Umlenkelement, beispielsweise einen Riemen, eine Kette oder ein Band, anzutreiben. Über das flexible Umlenkelement kann dann die Abwurfvorrichtung mit einem Schieber, einem Band oder einem schwenkbaren Hebel bewegt werden, um den Gegenstand abzuwerfen.

Vorzugsweise bewegt sich der Mitnehmer relativ zu der Transportrichtung im Wesentlichen parallel zur Bewegungsrichtung des Transportwagens, wobei ein Abschnitt des flexiblen Umlenkelementes im Wesentlichen senkrecht zur Transportrichtung bewegt wird, um die Abwurfvorrichtung abzutreiben. Die unterschiedlichen Abschnitte des flexiblen Umlenkelementes können somit genutzt werden, um einerseits eine Kopplung zwischen dem Anschlag und dem Mitnehmer herzustellen und andererseits die Abwurfvorrichtung anzutreiben. Dadurch ergibt sich auch eine kompakte Bauweise und eine effektive Möglichkeit des Sortierens von Gegenständen.

Die Erfindung wird nachfolgend anhand mehrerer Ausführungsbeispiele mit Bezug auf die beigefügten Zeichnungen näher erläutert. Es zeigen:

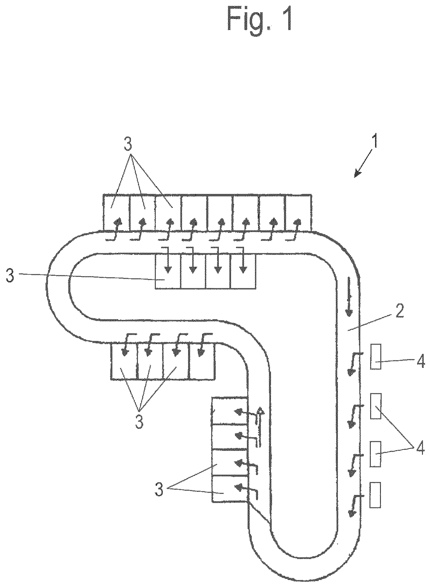

- Figur 1: eine schematische Ansicht einer erfindungsgemäßen Sortieranlage;
- Figuren 2A bis 2C: mehrere Ansichten eines Transportwagens einer Sortieranlage;
- Figuren 3A und 3B: zwei Ansichten eines Transportwagens beim Auftreffen auf einen Anschlag;
- Figur 4: eine Detailansicht eines Mitnehmers an einem Transportwagen;
- Figuren 5A bis 5C: mehrere Ansichten eines zweiten Ausführungsbeispiels eines Transportwagens, und
- Figur 6: eine perspektivische Ansicht eines dritten Ausführungsbeispiels eines Transportwagens.

Eine Sortieranlage 1 umfasst eine umlaufende Führungsbahn 2, die beispielsweise in einem Sortierzentrum installiert ist und deren Geometrie und Länge abhängig von der jeweiligen Einbausituation ausgewählt werden kann. Entlang der Führungsbahn 2 sind eine oder mehrere Aufladestationen 4 vorgesehen, an denen Gegenstände auf einzelne Transportwagen aufgegeben werden können. Entlang der Führungsbahn 2 sind ferner eine Vielzahl von Entladestationen 3 vorgesehen, die nur schematisch dargestellt sind. An jeder Entladestation kann ein Gegenstand an einem Transportwagen abgeworfen werden, wie dies durch die Pfeile schematisch dargestellt ist. Die Entladestationen 3 können dabei wahlweise nur an einer Seite der Führungsbahn oder an gegenüberliegenden Seiten der Führungsbahn 2 vorgesehen sein. Die Führungsbahn 2 kann dabei in einer montierten Position in einer einzigen horizontalen Ebene angeordnet sein. Optional ist es aber auch möglich, die Führungsbahn 2 zumindest bereichsweise geneigt zur horizontalen Richtung auszurichten, beispielsweise um Platz zu sparen und eine Rückführung der leeren Transportwagen oberhalb oder unterhalb der beladenen Transportwagen durchführen zu können.

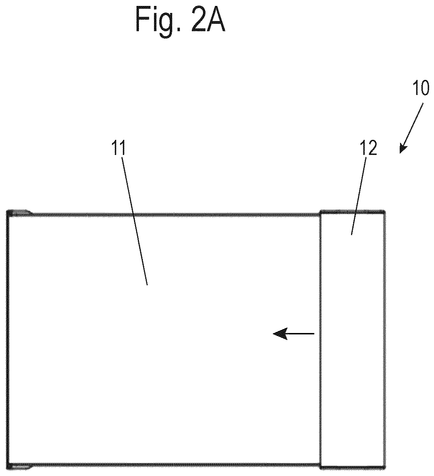

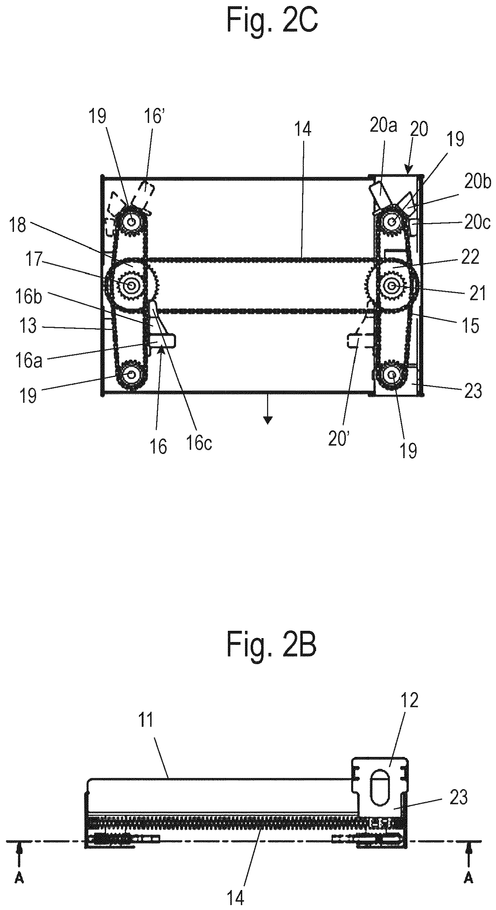

In den Figuren 2A bis 2C ist ein Transportwagen 10 gezeigt, der entlang einer Führungsbahn 2 einer Sortieranlage 1 verfahrbar ist. Der Transportwagen 10 umfasst eine Ladefläche 11, auf die ein Gegenstand ablegbar ist. Zum Entladen des Gegenstandes von dem Transportwagen 10 ist ein Schieber 12 vorgesehen, der in einer Ausgangsposition am rechten Ende in Figur 2A angeordnet ist und gemäß dem Pfeil zum Abwerfen des Gegenstandes nach links in eine Endposition bewegbar ist. Als Gegenstände können Pakete, Briefe, Produkte oder andere Gegenstände vorgesehen werden, die durch eine Bewegung des Schiebers 12 zur Sortierung entladen werden sollen.

An einer Unterseite der Ladefläche 11 des Transportwagens 10 ist die Antriebsmechanik gemäß Figur 2C vorgesehen, um den als Abwurfvorrichtung ausgebildeten Schieber 12 bewegen zu können. Ein flexibles Umlenkelemente umfasst drei geschlossene Abschnitte 13, 14 und 15, wobei die Abschnitte 13 und 15 des flexiblen Umlenkelemente in Längsrichtung im Wesentlichen in Bewegungsrichtung des Transportwagens 10 ausgerichtet sind. Ein Abschnitt 14 des flexiblen Umlenkelementes ist im Wesentlichen senkrecht zur Bewegungsrichtung des Transportwagens 10 ausgerichtet und parallel zur Bewegungsrichtung des linear geführten Schiebers 12.

An dem Abschnitt 13 ist ein Mitnehmer 16 fixiert, der drei Teile 16a, 16b und 16c aufweist, die bei Anordnung an einem linearen Abschnitt aneinander anliegen. Der Abschnitt 13 ist in Eingriff mit einem Zahnrad 17, das drehfest mit einem Zahnrad 18 verbunden ist, das einen größeren Durchmesser besitzt als das Zahnrad 17. Die Zahnräder 17 und 18 bilden somit ein Getriebe aus, um eine Bewegung des Abschnittes 13 des flexiblen Umlenkelementes auf den Abschnitt 14 zu übertragen. Dabei weist das Getriebe eine Übersetzung auf, um den Abschnitt 14 mit höherer Geschwindigkeit zu bewegen als den Abschnitt 13. Statt einer Übersetzung kann auch eine Untersetzung durch das Getriebe bewirkt werden, beispielswese um empfindliche oder schwere Güter von der Ladefläche 11 abzuwerfen.

Der Abschnitt 13 des flexiblen Umlenkelementes ist über zwei Umlenkrollen 19 geführt, die ebenfalls als Zahnräder ausgebildet sind.

Die Abschnitte 13, 14 und 15 des flexiblen Umlenkelementes sind in dem dargestellten Ausführungsbeispiel Ketten, es ist aber auch möglich, das flexible Umlenkelement durch Riemen, beispielsweise Zahnriemen, Bänder oder Seile auszubilden, die umlaufend geführt sind.

Der Abschnitt 15 des flexiblen Umlenkelementes ist um zwei Umlenkrollen 19 geführt, wobei der Abschnitt 15 ein Eingriff mit einem Zahnrad 21 steht, das drehfest mit einem Zahnrad 22 verbunden ist. Das Zahnrad 22 besitzt einen größeren Durchmesser als das Zahnrad 21, so dass auch dieses Getriebe eine Übersetzung ausbildet, die vorzugsweise der Übersetzung durch die Zahnräder 17 und 18 entspricht. Dadurch werden die Abschnitte 13 und 15 mit etwa gleicher Geschwindigkeit bewegt.

Der Abschnitt 14, der sich im Wesentlichen senkrecht zur Transportrichtung des Transportwagens 10 erstreckt, ist um die Zahnräder 18 und 22 geführt und koppelt somit die beiden Abschnitte 13 und 15 miteinander. An dem Abschnitt 14 ist ein Verbindungselement 23 fixiert, das mit dem Schieber 12 verbunden ist, so dass der Schieber 12 zusammen mit dem Abschnitt 14 des flexiblen Umlenkelementes bewegbar ist.

Wie in Figur 2C gezeigt ist, befindet sich der Mitnehmer 16 in einer Ausgangsposition an dem Abschnitt 13 des flexiblen Umlenkelementes. Wird der Mitnehmer 16 durch einen stationären Anschlag entlang der Führungsbahn 2 kontaktiert, wird der Abschnitt 13 des flexiblen Umlenkelementes gegen den Uhrzeigersinn gedreht, bis die Position des Mitnehmers 16' erreicht ist, bei der dieser um die Umlenkrolle 19 geführt wird. Dadurch verschwenken die Teile 16a, 16b und 16c des Mitnehmers 16 aus der Bewegungsbahn eines Anschlages, und der Anschlag und der Mitnehmer 16 werden entkoppelt. Die Bewegungsbahn des Anschlages bezieht sich dabei auf die Relativbewegung des Transportwagens 10 entlang der Führungsbahn 2 zu einem stationären Anschlag. Die Bewegungsrichtung des Transportwagens 10 ist dabei durch den Pfeil in Figur 2C dargestellt.

Durch die Bewegung des Mitnehmers 16 von der Ausgangsposition in die gestrichelt dargestellte Position wird der mittlere Abschnitt 14 und somit der Schieber 12 von der Ausgangsposition in die Entladeposition bewegt. Zudem dreht sich der Abschnitt 15 des flexiblen Umlenkelementes gegen den Uhrzeigersinn, so dass der Mitnehmer 20 von der Position an der Umlenkrolle 19 in eine Ausgangsposition bewegt wird, die gestrichelt eingezeichnet ist. Der Mitnehmer 20' befindet sich dann in einer Endposition die der Entladeposition des Schiebers 12 entspricht. Nun kann über einen weiteren Anschlag der Mitnehmer 20' kontaktiert werden, um den Schieber 12 wieder in die Ausgangsposition zu bewegen und den Mitnehmer 16 ebenfalls in die Ausgangsposition zu bewegen.

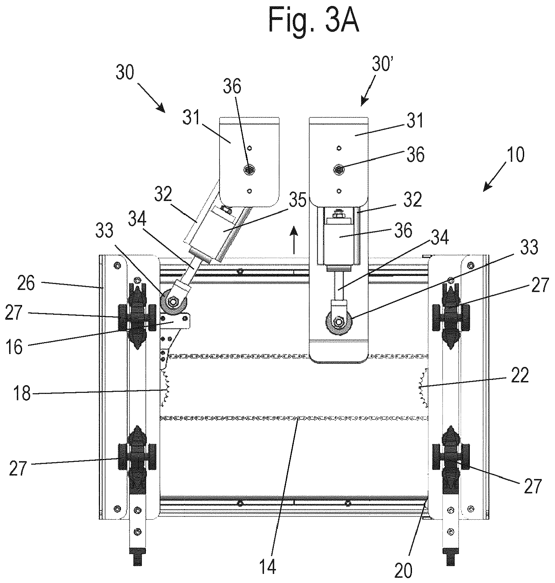

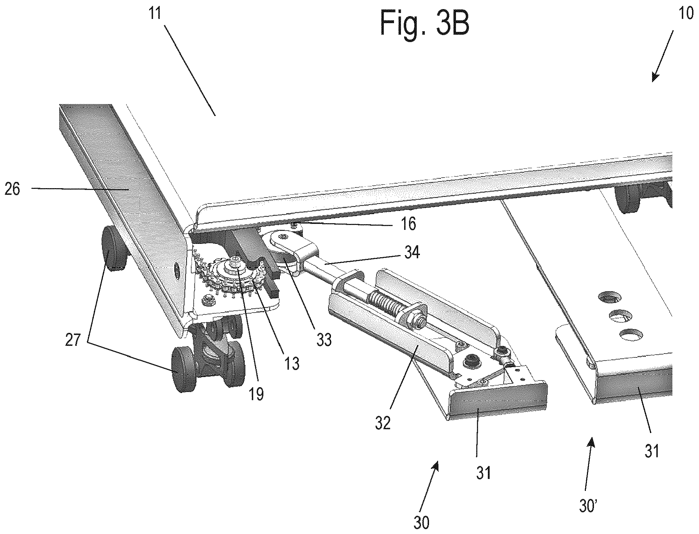

In den Figuren 3A und 3B ist der Transportwagen 10 im Bereich von zwei Anschlägen 30 und 30' gezeigt, die baugleich ausgebildet sein können, wobei ein Anschlag 30 zum Betätigen des Mitnehmers 16 und der andere Anschlag 30' zum Betätigen des Mitnehmers 20 dient. Die Anschläge 30 und 30' sind schaltbar ausgebildet, können also durch eine entsprechende Steuerung verschwenkt oder verschoben werden, um einen Mitnehmer 16 oder 20 zu kontaktieren oder vorbeifahren zu lassen. In Figur 3A ist der linke Anschlag 30 verschwenkt worden, um den Mitnehmer 16 zu kontaktieren. Der rechte Anschlag 30' befindet sich in einer Ausgangsposition, in der der Mitnehmer 20 nicht kontaktiert wird, selbst wenn sich dieser in der Ausgangsposition befinden würde. Jeder Anschlag 30, 30' umfasst ein stationäres Gehäuse 31, an dem ein Schwenkarm 32 um eine Achse 36 drehbar gelagert ist. An dem Schwenkarm 32 befindet sich ein Zylinder 35, beispielsweise mit einem bestrombaren Magneten, einem Motor oder einer Feder, und eine Kolbenstange 34, an deren Ende eine Rolle 33 vorgesehen ist, die den Mitnehmer 16 oder 20 kontaktiert. Die Kolbenstange 34 kann in den Zylinder 35 einfahrbar sein, beispielsweise um einen harten Anschlag zu dämpfen.

Der Transportwagen 10 umfasst mehrere Laufwerke 27 mit Laufrollen, die mit Schienen der Führungsbahn 2 in Eingriff stehen, um den Transportwagen 10 entlang der Führungsbahn 2 verfahren zu können.

Wie in Figur 3B ersichtlich ist, besitzt jeder Transportwagen 10 unter der Ladefläche 11 eine Kante 26, an der die Laufwerke 27 fixiert sind. Innerhalb der Kante 26, die U-förmig gebogen ist, befinden sich die Umlenkrollen 19 zur Umlenkung des Abschnittes 13 des flexiblen Umlenkelementes. Es können weitere Führungsmittel für den Abschnitt 13 vorgesehen sein. Der Anschlag 30 kontaktiert den Mitnehmer 16 und kann diesen durch die Relativbewegung des Transportwagens 10 zu dem Anschlag 30 antreiben, um den Schieber 12 von der Ausgangsposition in die Entladeposition zu verschieben, wie dies oben beschrieben wurde.

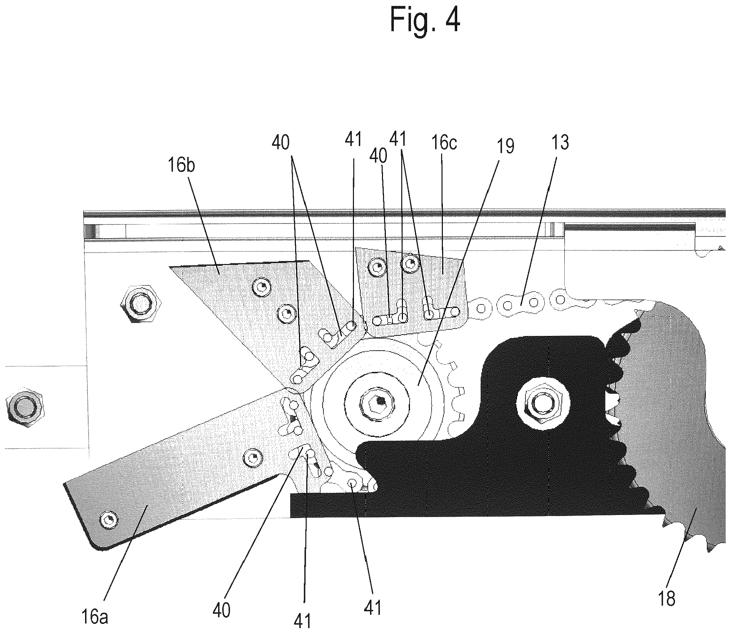

In Figur 4 ist eine Umlenkrolle 19, die als Zahnrad ausgebildet ist, im Detail dargestellt. Um die Umlenkrolle 19 ist der Abschnitt 13 in Form einer Kette geführt, wobei die einzelnen Kettenglieder hervorstehende Zapfen 41 aufweisen. Jeweils zwei hervorstehende Zapfen 41 sind in einer winkelförmigen Aufnahme an einem Teil 16a, 16b und 16c des Mitnehmers 16 geführt. Dadurch können die Teile 16a, 16b und 16c des Mitnehmer 16 relativ zueinander verschwenken, so dass im Bereich der Umlenkrolle 19 diese sternförmig hervorstehen und aus einer Bewegungsbahn des Anschlages 30 verschwenkt werden, so dass ein Kontakt zwischen dem Mitnehmer 16 und dem Kontaktelement 33 gelöst wird. Durch die mehrteilige Ausbildung des Mitnehmers 16 können Antriebskräfte auf die Teile 16a, 16b und 16c des Mitnehmers 16 verteilt werden.

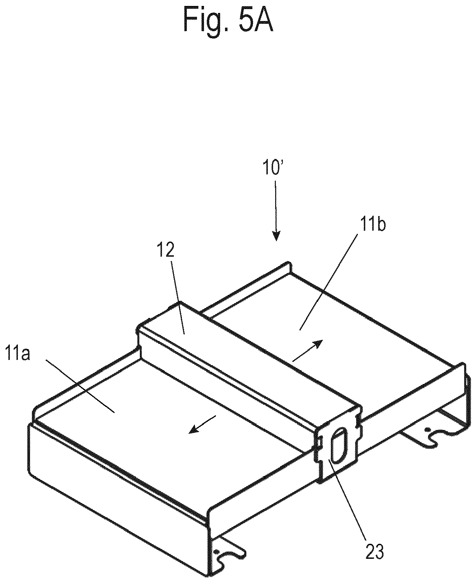

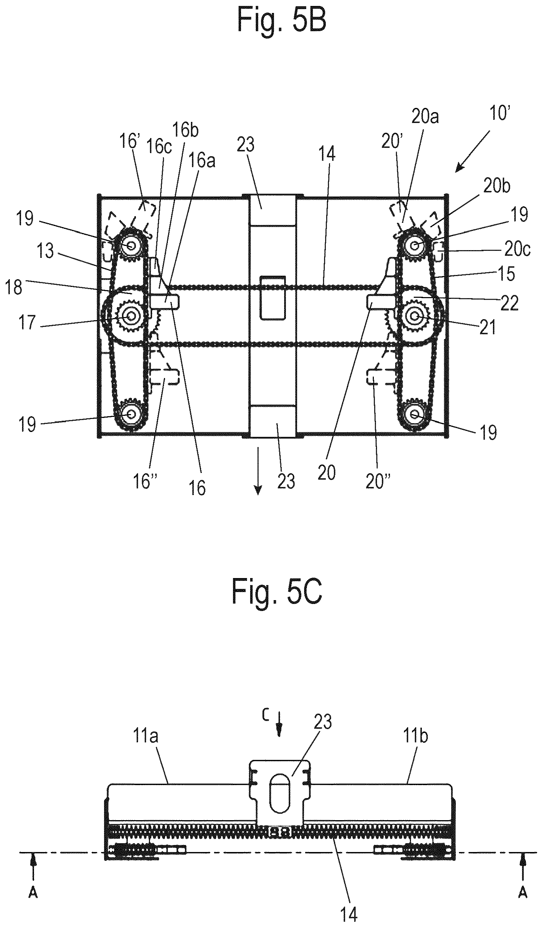

In den Figuren 5A bis 5C ist ein weiteres Ausführungsbeispiel eines Transportwagens 10' gezeigt, der wie bei dem ersten Ausführungsbeispiel einen Schieber 12 aufweist, der linear entlang dem Transportwagen 10' geführt ist. Der Schieber 12 befindet sich in einer Ausgangsposition in einem mittleren Bereich und kann entsprechend dem Pfeilen in beide Richtungen bewegt werden, nämlich über die Ladefläche 11a oder die Ladefläche 11b, je nachdem, auf welcher Ladefläche 11a oder 11b sich ein Gegenstand befindet, der über die Bewegung des Schiebers 12 entladen werden soll.

Wie in Figur 5B gezeigt ist, befindet sich unterhalb der Ladeflächen 11a und 11b die Antriebsmechanik mit einem flexiblem Umlenkelement, das Abschnitte 13 und 15 aufweist, die sich im Wesentlichen parallel zur Bewegungsrichtung des Transportwagens 10' erstrecken, und einen Abschnitt 14, der sich im Wesentlichen senkrecht zur Bewegungsrichtung des Transportwagens 10' erstreckt. Der Mitnehmer 16, der in einer Ausgangsposition in einem mittleren Bereich angeordnet ist, kann von der Ausgangsposition in eine erste Endposition 16' bewegt werden, indem der Schieber die Ladefläche 11a entlädt, oder von der Ausgangsposition eine zweite Endposition 16", in der der Schieber 12 die zweite Ladefläche 11b entlädt. Dabei kann ein Anschlag den Mitnehmer 16 von der Ausgangsposition in die Endposition 16' bewegen, während für eine Bewegung des Schiebers 12 in gegenläufige Richtung der Mitnehmer 20 durch einen Anschlag kontaktiert wird. Auch der Mitnehmer 20 kann von der mittleren Ausgangsposition in eine erste Endposition gemäß Mitnehmer 20' oder eine zweite Endposition gemäß Mitnehmer 20" bewegt werden, je nachdem, welche Ladefläche 11a oder 11b durch den Schieber 12 entladen werden soll. Die Betätigung der Mitnehmer 16 und 20 erfolgt wieder über Anschläge 30 oder 30', wie dies mit Bezug auf Figur 3A erläutert wurde.

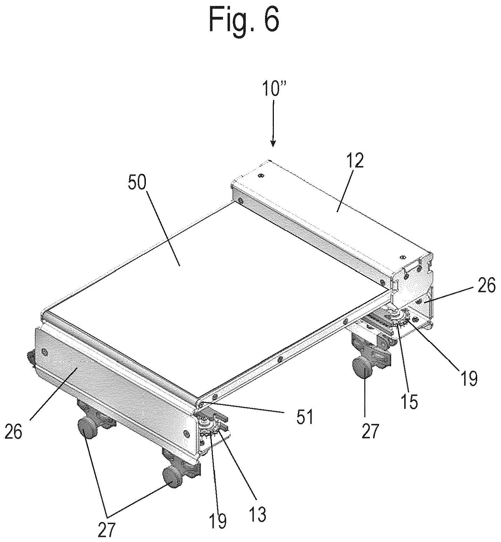

In Figur 6 ist ein modifiziertes Ausführungsbeispiel eines Transportwagens 10" gezeigt, der ähnlich dem ersten Ausführungsbeispiel ausgebildet ist, allerdings ist statt einer unbewegbaren Ladefläche 11 ein bewegbares Transportband 50, insbesondere ein umlaufendes Transportband, vorgesehen, das mit dem Schieber 12 gekoppelt ist. Optional kann auch auf den Schieber 12 verzichtet werden, und ein Entladen kann nur über eine Bewegung des umlaufenden Transportbandes 50 erfolgen, das beispielsweise an seiner äußeren Oberfläche Rippen oder Profilierungen aufweisen kann. Das umlaufende Transportband 50 ist mit dem Abschnitt 14 des flexiblen Umlenkelementes gekoppelt, wie dies für den Schieber 12 bereits beschrieben wurde. Das Transportband 50 ist an gegenüberliegenden Enden um Umlenkwalzen 51 herumgeführt.

In den dargestellten Ausführungsbeispielen umfasst das flexible Umlenkelement jeweils drei Abschnitte 13, 14 und 15. Es ist auch möglich, ein flexibles Umlenkelement aus nur einem einzigen Abschnitt herzustellen, das über entsprechende Umlenkrollen geführt ist. Dann wird das flexible Umlenkelement an allen Abschnitten mit der gleichen Geschwindigkeit bewegt.

Das flexible Umlenkelement kann statt als Kette auch als Zahnriemen, Riemen, Band oder Seil ausgebildet sein.

### Bezugszeichenliste

- 1: Sortieranlage
- 2: Führungsbahn
- 3: Entladestation
- 4: Aufladestation
- 10, 10', 10": Transportwagen
- 11: Ladefläche
- 11a, 11b: Ladefläche
- 12: Schieber
- 13: Abschnitt
- 14: Abschnitt
- 15: Abschnitt
- 16: Mitnehmer
- 16': Endposition
- 16": Endposition
- 16a, 16b, 16c: Teil des Mitnehmers
- 17: Zahnrad
- 18: Zahnrad
- 19: Umlenkrolle
- 20, 20', 20": Mitnehmer
- 21: Zahnrad
- 22: Zahnrad
- 23: Verbindungselement
- 26: Kante
- 27: Laufwerk
- 30, 30': Anschlag
- 31: Gehäuse
- 32: Schwenkarm
- 33: Rolle
- 34: Kolbenstange
- 35: Zylinder
- 36: Achse
- 41: Zapfen
- 50: Transportband
- 51: Umlenkwalze

## Patentansprüche

1. Sortieranlage (1) mit einer Vielzahl von Transportwagen (10, 10', 10"), die entlang einer Führungsbahn (2) umlaufend verfahrbar sind, und an mindestens einer Aufladestation (4) mindestens ein Gegenstand auf einen Transportwagen (10, 10', 10") aufladbar ist, der an einer Entladestation (3) von einer Vielzahl von Entladestationen (3) von dem Transportwagen (10, 10', 10") über eine Abwurfvorrichtung (12, 50) des Transportwagens (10, 10', 10") abwerfbar ist, **dadurch gekennzeichnet, dass** die Abwurfvorrichtung (12, 50) über ein umlaufendes flexibles Umlenkelement (13, 14, 15) antreibbar ist, an dem ein Mitnehmer (16, 20) festgelegt ist, und über einen Anschlag (30, 30') der Mitnehmer (16, 20) und das flexible Umlenkelement (13, 14, 15) bewegbar sind, um die Abwurfvorrichtung (12, 50) anzutreiben.

2. Sortieranlage nach Anspruch 1, **dadurch gekennzeichnet, dass** das flexible Umlenkelement (13, 14, 15) mindestens ein Band, einen Riemen oder eine Kette umfasst.

3. Sortieranlage nach Anspruch 1 oder 2, **dadurch gekennzeichnet, dass** das flexible Umlenkelement (13, 14, 15) über mehrere drehbar gelagerte Umlenkrollen (19) geführt ist.

4. Sortieranlage nach einem der vorhergehenden Ansprüche, **dadurch gekennzeichnet, dass** das flexible Umlenkelement einen ersten Abschnitt (13, 15), der sich im Wesentlichen parallel zur Bewegungsrichtung des Transportwagens (10, 10', 10") erstreckt, und einen zweiten Abschnitt (14) aufweist, der sich im Wesentlichen senkrecht zur Bewegungsrichtung des Transportwagens (10, 10', 10") erstreckt.

5. Sortieranlage nach Anspruch 4, **dadurch gekennzeichnet, dass** die beiden Abschnitte (13, 14, 15) unverbunden und über mindestens ein Getriebe (17, 18, 21, 22) miteinander gekoppelt sind.

6. Sortieranlage nach Anspruch 5, **dadurch gekennzeichnet, dass** das Getriebe (17, 18, 21, 22) eine Übersetzung aufweist, so dass der Abschnitt (14) im Wesentlichen senkrecht zur Bewegungsrichtung des Transportwagens S10, 10', 10") schneller oder langsamer bewegt wird als der Abschnitt (13, 15) der sich im Wesentlichen parallel zur Bewegungsrichtung erstreckt.

7. Sortieranlage nach einem der vorhergehenden Ansprüche, **dadurch gekennzeichnet, dass** das flexible Umlenkelement zwei Abschnitte (13, 15) umfasst, die sich im Wesentlichen parallel zur Bewegungsrichtung eines Transportwagens (10, 10', 10") erstrecken und an einem ersten Abschnitt (13) ein Mitnehmer (16) zum Antreiben der Abwurfvorrichtung (12, 50) in Abwurfrichtung und an einem zweiten Abschnitt (15) ein Mitnehmer (20) zum Antreiben der Abwurfvorrichtung (12, 50) in gegenläufige Richtung vorgesehen ist.

8. Sortieranlage nach einem der vorhergehenden Ansprüche, **dadurch gekennzeichnet, dass** die Abwurfvorrichtung einen Schieber (12), einen Schwenkarm oder ein Band (50) aufweist, das mit dem flexiblen Umlenkelement (13, 14, 15), insbesondere einem Abschnitt (14) im Wesentlichen senkrecht zur Bewegungsrichtung des Transportwagens (10, 10', 10") verbunden ist.

9. Sortieranlage nach einem der vorhergehenden Ansprüche, **dadurch gekennzeichnet, dass** entlang des Verfahrweges des Transportwagens (10, 10', 10") mehrere schaltbare Anschläge (30, 30') vorgesehen sind.

10. Sortieranlage nach Anspruch 9, **dadurch gekennzeichnet, dass** jeder Anschlag (30, 30') ein verschwenkbares und/oder verschiebbares Kontaktelement (33) aufweist.

11. Sortieranlage nach einem der vorhergehenden Ansprüche, **dadurch gekennzeichnet, dass** der Mitnehmer (16, 20) mehrere Teile (16a, 16b, 16c, 20a, 20b, 20c) umfasst, die jeweils an dem flexiblen Umlenkelement (13, 15) fixiert sind.

12. Sortieranlage nach einem der vorhergehenden Ansprüche, **dadurch gekennzeichnet, dass** die Abwurfvorrichtung (12, 50) von einer Ausgangsposition nur in eine Richtung in Abwurfrichtung zu einer Endposition bewegbar ist.

13. Sortieranlage nach einem der Ansprüche 1 bis 11, **dadurch gekennzeichnet, dass** die Abwurfvorrichtung (12, 50) von einer Ausgangsposition in gegenüberliegende Richtung jeweils zu einer Endposition bewegbar ist.

14. Sortieranlage nach einem der vorhergehenden Ansprüche, **dadurch gekennzeichnet, dass** vor jeder Endposition der Abwurfvorrichtung (12, 50) ein Dämpfer zum Abbremsen der Bewegung der Abwurfvorrichtung (12, 50) vorgesehen ist.

15. Verfahren zum Sortieren von Gegenständen, mit den folgenden Schritten:
- Verfahren einer Vielzahl von zusammenhängenden Transportwagen (10, 10', 10") entlang einer umlaufenden Führungsbahn (2);
- Aufladen mindestens eines Gegenstandes auf einen Transportwagen (10, 10', 10") an einer Aufladestation (4);
- Verfahren des Transportwagens (10, 10', 10") zu einer Entladestation (3) und Entladen des mindestens einen Gegenstandes über eine Abwurfvorrichtung (12, 50) des Transportwagens (10, 10', 10"),
**dadurch gekennzeichnet, dass** zum Entladen des mindestens einen Gegenstandes die Abwurfvorrichtung (12, 50) über einen Mitnehmer (16, 20) an einem umlaufenden flexiblen Umlenkelement (13, 14, 15) angetrieben wird, das gegen einen Anschlag (30, 30') aufläuft.

16. Verfahren nach Anspruch 15, **dadurch gekennzeichnet, dass** der Mitnehmer (16, 20) relativ zu dem Transportwagen (10, 10', 10") im Wesentlichen parallel zur Transportrichtung bewegt wird und ein Abschnitt (14) des flexiblen Umlenkelementes die Abwurfvorrichtung im Wesentlichen senkrecht zur Bewegungsrichtung des Transportwagens (10, 10', 10") antreibt.
